# EUROPEAN PATENT APPLICATION

(11) **EP 2 506 610 A2**
(43) Date of publication of application: **03.10.2012**
(21) Application number: 12002264.5
(22) Date of filing: 29.03.2012
(51) Int. Cl.: H04W 8/08, H04W 76/00, H04W 36/00

(54) **Method and apparatus to improve high-speed mobility in a wireless communication system**

(30) Priority: 29.03.2011 US 201161468969 P
(71) Applicant: Innovative Sonic Corporation, Taipei City 11493 (TW)
(72) Inventor: Ou, Meng-Hui, Neihu District Taipei City 11493 (TW); Guo, Yu-Hsuan, Neihu District Taipei City 11493 (TW)
(74) Representative: Görz, Ingo

(57) **Abstract**

A method and apparatus are disclosed to improve high-speed mobility. In one embodiment, the method comprises connecting a device to a cell. The method also comprises maintaining, at the device, information related to a location of the device. The method further comprises triggering, by an event trigger related to a velocity of the device, a transmission of a report that includes the information related to the location of the device.

## Description

### CROSS-REFERENCE TO RELATED APPLICATIONS

The present application claims the benefit of U.S. Provisional Patent Application Serial No. 61/468,969 filed on March 29, 2011 the entire disclosure of which is incorporated herein by reference.

### FIELD

This disclosure generally relates to wireless communication networks, and more particularly, to a method and apparatus to improve high-speed mobility in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus to improve high-speed mobility are disclosed in independent claims 1, 8, 11, 12 and 15. The dependent claims pertain to preferred embodiments thereof. In one embodiment, the method comprises connecting a device to a cell. The method also comprises maintaining, at the device, information related to a location of the device. The method further comprises triggering, by an event trigger related to a velocity of the device, a transmission of a report that includes the information related to the location of the device.

### BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a flow chart according to one exemplary embodiment.

FIG. 6 is a flow chart according to one exemplary embodiment.

FIG. 7 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3 GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. TS 36.321 V10.0.0, "MAC protocol specification (Release 10)"; TS 36.331-V10.0.0, "RRC protocol specification (Release 10)"; RP-110398, "New Study Item Proposal: Mobile Relay for EUTRA"; TS 36.300 V10.2.0, "E-UTRA and E-UTRAN; Overall description; Stage 2"; TS 36.355 V10.0.0, "LTE Positioning Protocol"; TS 36.305 V10.0.0, "Stage 2 functional specification ofUE positioning in E-UTRAN"; TS 36.423 V10.0.0, "E-UTRAN X2AP (Release 10)". The standards and documents listed above are hereby expressly incorporated herein.

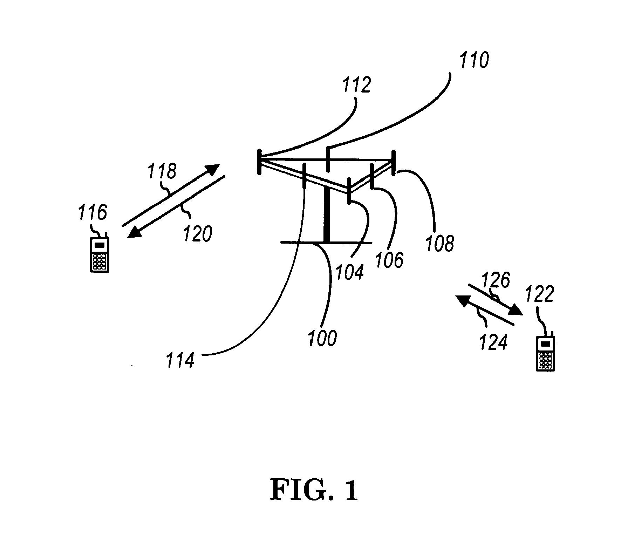

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a relay node (RN), a wireless communication device, terminal, access terminal or some other terminology.

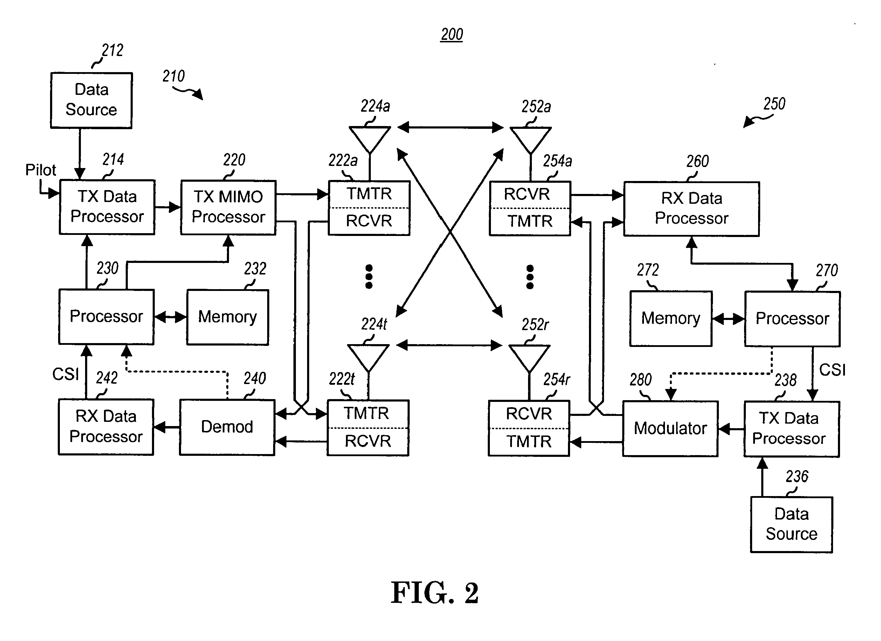

FIG. 2 is a simplified block diagram of an embodiment of a transmitter system 210 (also known as the access network) and a receiver system 250 (also known as access terminal (AT) or user equipment (UE) or relay node (RN)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the N*_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

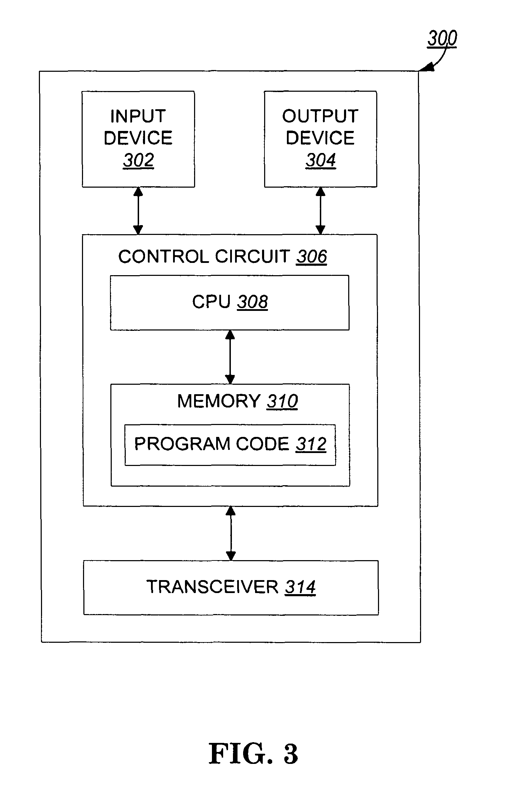

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs or RNs) 116 and 122 in FIG. 1, and the wireless communications system is preferably the LTE-A system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

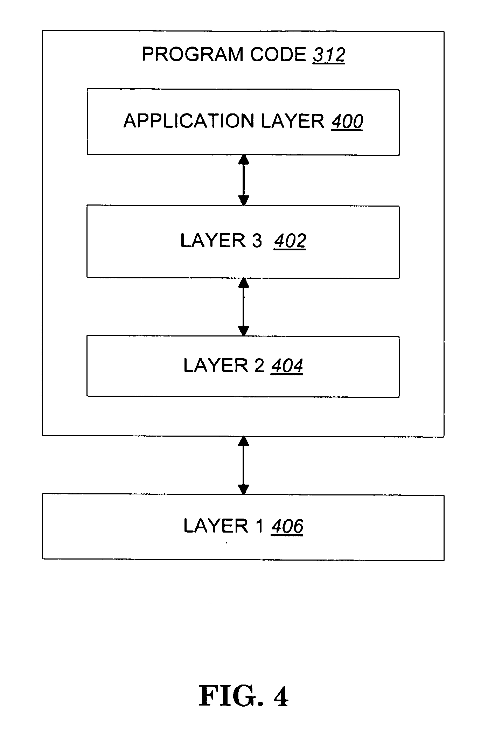

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP RP-110398 proposes a new Study Item about Mobile Relay for Evolved Universal Terrestrial Radio Access (EUTRA). In general, high speed public transportation is being deployed worldwide at an increased pace. Hence, providing multiple services of good quality to users on high speed vehicles is important. One of the challenges comparing with the typical mobile wireless environments is the reduced handover success rate due to the following reasons: (i) handover occurs much more frequent; (ii) a mass of UEs performing handover at the same time which results in excessive signaling overhead; and (iii) UE measurements in high speed environments are typically less accurate than low speed environments. Mobile relay node (e.g., a relay node mounted on a vehicle wirelessly connected to the macro cells) is considered to be a potential technique to solve the problem. Information related to a stationary relay node can be found in 3GPP TS 36.331 V10.0.0 and TS 36.300 V10.2.0.

The Relay Node (RN) startup procedure is described in 3GPP TS 36.300 V10.2.0 as follows:
4.7.6.3 RN startup procedure
   Figure 4.7.6.3-1 shows a simplified version of the startup procedure for the RN. The procedure is based on the normal UE attach procedure [17] and it consists of the following two phases:
   I. Phase I: Attach for RN preconfiguration.
      The relay node attaches to the E-UTRAN/EPC as UE at power-up and retrieves initial configuration parameters, e.g. list of DeNB cells, from RN OAM. After this operation is complete, the relay node detaches from the network as a UE and triggers Phase II. The MME performs the S-GW and P-GW selection for the RN as a normal UE.
   II. Phase II: Attach for RN operation.
      The relay node connects to a DeNB selected from the list acquired during Phase I to start relay operations. For this purpose, the normal RN attach procedure described in section 4.7.6.1 is applied. After the DeNB initiates setup of bearer for S1/X2, the RN initiates the setup of S1 and X2 associations with the DeNB (see section 4.7.4). In addition, the DeNB may initiate an RN reconfiguration procedure via RRC signalling for RN-specific parameters.
      After the S1 setup, the DeNB performs the S1 eNB Configuration Update procedure(s), if the configuration data for the DeNB is updated due to the RN attach. After the X2 setup, the DeNB performs the X2 eNB Configuration Update procedure(s) to update the cell information. In this phase the RN cells' ECGIs are configured by RN OAM

As described above, the relay node operates as a UE and retrieves a list of DeNB (Donor evolved Node B) cells that are allowed to access during Phase I of the RN startup procedure. The relay node operates as a relay node and connects to a DeNB during Phase II. Furthermore, as specified in 3GPP TS 36.300 V10.2.0, inter-cell handover is not supported for (stationary) relay nodes.

Besides, the *LocationInfo* information element is used in RRC layer to transfer location information available at the UE, as discussed in 3GPP TS 36.331 V10.0.0. Currently, the *LocationInfo* information element may be included in a *MeasurementReport* message or a *UEInformationResponse* message. In general, the *LocationInfo* information element includes the position and the velocity of the UE. The detailed content of *LocationInfo* information element is specified in 3GPP TS 36.331 V10.0.0 as follows:

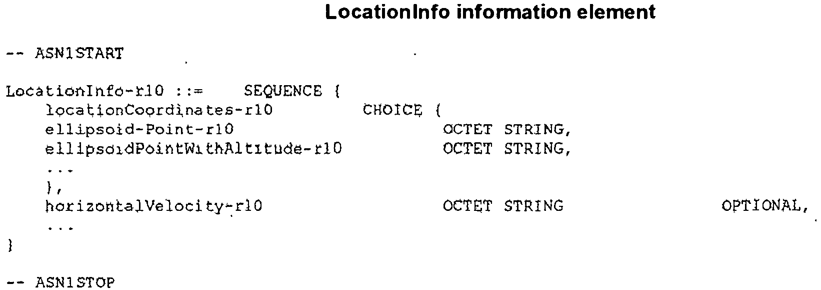

| ***LocationInfo field descriptions*** |
|---|
| ***ellipsoid-Point*** |
| Parameter *Ellipsoid-Point* defined in TS 36.355. |
| ***ellipsoidPointwithAltitude*** |
| Parameter *EllipsoidPointWithAltitude* defined in TS 36.355. |
| ***horizontalVelocity*** |
| Parameter *HorizontalVelocity* defined in TS 36.355. |

As discussed in 3GPP TS 36.355 V10.0.0, the *ProvideLocationInformation* message (or LPP Provide Location Information message as specified in 3GPP TS 36.305 V10.0.0) is used by the target device (e.g., UE) to provide positioning measurements or position estimates in LTE Positioning Protocol (LPP) layer to the location server, such as E-SMLC (Evolved Serving Mobile Location Centre).

In general, it could be assumed that measurements in high speed environments are less accurate. Accordingly, different measurement configuration (such as different thresholds for event trigger or different periodicities for periodic trigger) may be required for a UE depending on whether the UE is in high speed moving or not. However, it may be difficult for a network to know whether a UE is moving in high speed until a *MeasurementReport* message with a *LocationInfo* information element in Radio Resource Control (RRC) or a *ProvideLocationInformation* message in the LTE Positioning Protocol (LPP) is received by the network. As such, suitable measurement configuration as well as other configuration related to the location of the UE would be set or configured with some delay.

In addition, after a UE connects to one cell, handover to another cell may need to be initiated promptly due to high speed movement. However, eNB may not know that a UE is moving in high speed. Accordingly, initiating a handover procedure after receiving a measurement report may be too late and may result in RRC connection re-establishment. More information would be helpful for eNB to initiate a handover (such as a blind handover) intelligently.

Several alternatives could be used individually or together to enable the network to timely configure a device with suitable configurations which is relevant to location of the device (such as measurement configurations - described in 3GPP TS 36.331 V10.0.0), and can timely initiate a handover procedure (described in 3 GPP TS 36.331 V10.0.0). In one embodiment, a device could provide information related to its location (such as position, velocity, or measurement results) upon connecting to a cell (for example, by initial access, connection re-establishment, or handover) as described in 3GPP TS 36.331 V10.0.0.

In an alternative embodiment, a report (which includes information related to the position and/or velocity of a device) could be triggered by an event trigger which is related to the velocity of the device. The report could be carried by a RRC message (such as a *MeasurementReport* message - described in 3GPP TS 36.331 V10.0.0), or a MAC control element (described in 3GPP TS 36.321 V10.0.0). In another embodiment, a source eNB could provide information related to location of a device to a target eNB during the handover preparation phase. In addition, the information related to location could include position, velocity, or measurement results. Furthermore, the location information could be provided through, for example, a *HandoverPreparationlnformation* message (described in 3GPP TS 36.331 V10.0.0) or a Handover Request message (described in 3GPP TS 36.423 V10.0.0). Also, the device can be a UE or a mobile relay node.

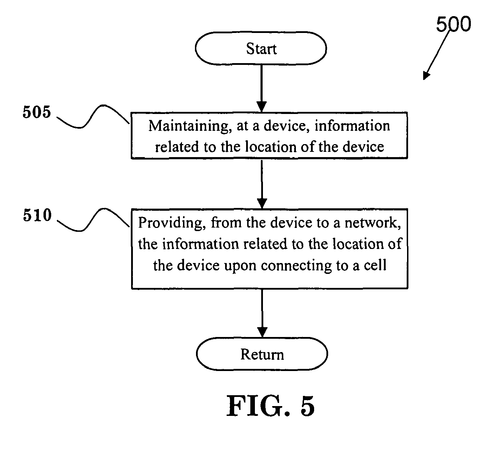

FIG. 5 illustrates a flow chart 500 in accordance with one exemplary embodiment. In step 505, the device keeps and maintains information related to its location. In step 510, the device provides to the network the information related to the location of the device when the device connects to a cell. In one embodiment, the location information of the device could be carried by or provided through a *RRCConnectionSetupComplete* message, a *RRCConnectionReestablishmentComplete* message, or a *RRCConnectionReconfigurationComplete* message for a handover procedure, which are described in 3GPP TS 36.331 V10.0.0. Furthermore, the cell may not be controlled by a mobile relay node.

Referring back to FIGS. 3 and 4, the UE (or a relay node) 300 includes a program code 312 stored in memory 310. In one embodiment, the CPU 308 could execute the program code 312 (i) to maintaining, at a device, information related to the location of the device, and (ii) to provide, from the device to a network, the information related to the location of the device when the device connects to a cell in the network.

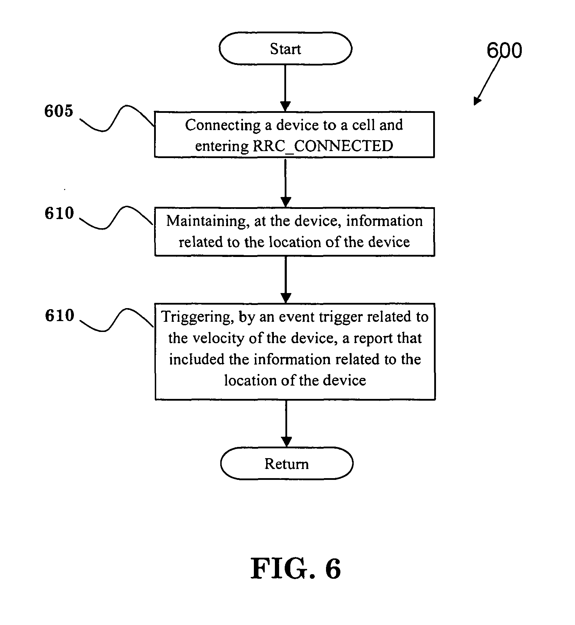

FIG. 6 illustrates a flow chart 600 in accordance with one exemplary embodiment. In step 605, a device is being connected to a cell, and is entering the RRC_CONNECTED state. In step 610, the device keeps and maintains information related to its location. In step 615, an event trigger related to the velocity of the device could be used to trigger the transmission of a report that includes the information related to the location of the device. One example of the event trigger is that the report is triggered when the velocity of the device becomes higher (or lower) than a threshold. Furthermore, the device could be configured to enable the transmission of the report. And the report is not prohibited, for example, by a prohibit timer. In addition, the device could connect to the cell by a RRC connection establishment procedure, a RRC connection re-establishment procedure, or a handover procedure. Furthermore, the cell may not be controlled by a mobile relay node.

Referring back to FIGS. 3 and 4, the UE (or a relay node) 300 includes a program code 312 stored in memory 310. In one embodiment, the CPU 308 could execute the program code 312 (i) to connect a device to a cell, (ii) to maintain, at the device, information related to a location of the device, and (iii) to trigger, by an event trigger related to a velocity of the device, a report that includes the information related to the location of the device.

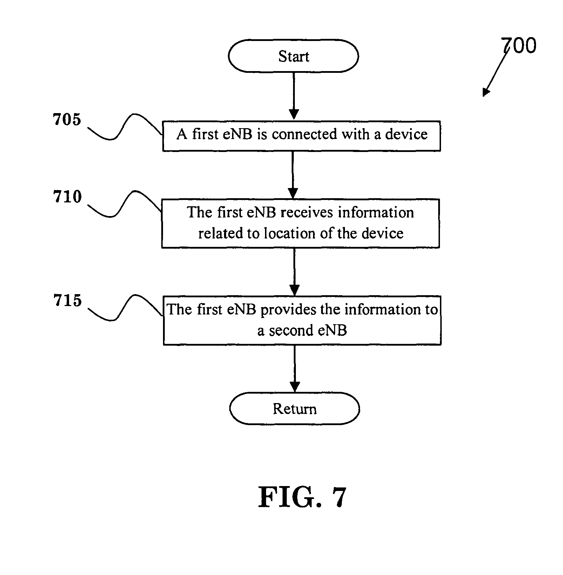

FIG. 7 illustrates a flow chart 700 in accordance with one exemplary embodiment. In step 705, a first eNB is connected by a device. In step 710, the first eNB receives information related to the location of the device. In step 715, the first eNB sends, to a second eNB, the information related to the location of the device.

Referring back to FIGS. 3 and 4, a first eNB 300 includes a program code 312 stored in memory 310. In one embodiment, the CPU 308 could execute the program code 312 (i) to have the first eNB connected by the device, (ii) to receive, at the first eNB, information related to the location of the device, and (iii) to send the information related to the location of the device from the first eNB to a second eNB.

In addition, the CPU 308 can execute the program code 312 to perform all of the described actions and steps or others described herein.

Furthermore, for the above embodiments, the device could be a mobile relay node or a UE. The device may be moving in high speed, such that it could, for example, be judged by a threshold. In one embodiment, the information related to the location of the device may include position of the device which could be expressed by latitude and longitude. In another embodiment, the information related to the location of the device may include velocity of the device which could be expressed by speed or bearing. In an alternative embodiment, the information related to the location of the device (i) may include measurement results which are used to estimate the location of the device, and (ii) may be carried by a *LocalionInfo* information element or a *ProvideLocationInformation* message (which may be carried by an *ULInformationTransfer message* described in 3GPP TS 36.423 V10.0.0). In a different embodiment, the information related to the location of the device may include an indication that the device is moving in high speed, e.g. which is judged by a threshold. Furthermore, the device could determine its position and/or velocity by supporting Global Navigation Satellite System (GNSS), Observed Time Difference of Arrival (OTDOA), Assisted Global Navigation Satellite System (A-GNSS), Enhanced Cell-ID (E-CID) positioning method (described in 3GPP TS 36.355 V10.0.0 or TS 36.305 V10.0.0), or LTE Positioning Protocol (LPP).

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method to improve high-speed mobility, comprising:
maintaining, at a device, information related to a location of the device; and
providing, from the device to a network, the information related to the location of the device when the device connects to a cell in the network.

2. The method of claim 1, wherein the information related to the location of the device is carried by a *RRCConnectionSetupComplete* message.

3. The method of claim 1 or 2, wherein the information related to the location of the device is carried by a *RRCConnectionReestablishmentComplete* message.

4. The method of anyone of claims 1 to 3, wherein the information related to the location of the device is carried by a *RRCReconfigurationComplete* message for a handover procedure.

5. The method of anyone of claims 1 to 4, wherein the information related to the location of the device includes measurement results used to estimate the location of the device.

6. The method of anyone of claims 1 to 5, wherein the information related to the location of the device includes an indication that the device is moving in high speed.

7. The method of anyone of claims 1 to 6, wherein the information related to the location of the device includes a velocity of the device.

8. A method to improve high-speed mobility, comprising:
connecting a device to a cell;
maintaining, at the device, information related to a location of the device;
triggering, by an event trigger related to a velocity of the device, a transmission of a report that includes the information related to the location of the device.

9. The method of claim 8, wherein the report is a RRC (Radio Resource Control) message, such as a *MeasurementReport* message.

10. The method of claim 8 or 9, wherein the report is triggered when the velocity of the device becomes higher than a threshold.

11. A communication device for use in a wireless communication system, the communication device comprising:
a control circuit;
a processor installed in the control circuit;
a memory installed in the control circuit and coupled to the processor;
wherein the processor is configured to execute a program code stored in the memory to improve high speed mobility by the method steps as defined in anyone of the preceding claims.

12. A method to improve high-speed mobility, comprising:
connecting a first evolved Node B, in the following referred to as eNB, to a device;
receiving, at the first eNB, the information related to the location of the device;
providing, from the first eNB to a second eNB, the information related to the location of the device.

13. The method of claim 12, wherein the information related to the location of the device is carried by a *HandoverPreparationlnformation* message from the first eNB to the second eNB.

14. The method of claim 12 or 13, wherein the information related to the location of the device is carried by a Handover Request message from the first eNB to the second eNB.

15. An access network for use in a wireless communication system, the access network comprising:
a control circuit;
a processor installed in the control circuit;
a memory installed in the control circuit and coupled to the processor;
wherein the processor is configured to execute a program code stored in the memory to improve high speed mobility by the method steps as defined in anyone of the preceding claims 12 to 14.
